# EUROPÄISCHE PATENTANMELDUNG

(11) **EP 2 093 050 A1**
(43) Veröffentlichungstag der Anmeldung: **26.08.2009**
(21) Anmeldenummer: 09007807.2
(22) Anmeldetag: 19.04.2005
(51) Int. Cl.: B32B 5/26, A41D 13/12

(54) **Vlies-/Folienlaminat**

(30) Priorität: 07.05.2004 DE 102004024042
(62) Teilanmeldung aus: 05731077.3
(71) Anmelder: Paul Hartmann AG, 89522 Heidenheim (DE)
(72) Erfinder: Steger, Alexandra, 4850 Timelkam (AT)
(74) Vertreter: Langöhrig, Angelika Beate

(57) **Zusammenfassung**

Die Erfindung betrifft ein Vlies-/Folienlaminat umfassend eine Folie und auf beiden Seiten der Folie eine Vliesschicht, wobei mindestens eine eine Sichtseite des Laminats bildende Oberfläche der Vliesschicht einen Lintingkoeffizienten kleiner 2,7 aufweist und wobei die mindestens eine Sichtseite des Laminats bildende Oberfläche der Vliesschicht einen Gleitreibungskoeffizienten zwischen p = 0,35 und 0,75 aufweist und das Laminat einer Wassersäule von W > 400 cm, insbesondere von W > 500 cm standhält und eine Wasserdampfdurchlässigkeit von WVTR > 4000 g/m²/24h aufweist, sowie ein Verfahren zu Herstellung eines solchen Vlies-/Folienlaminats und ein wegwerfbares Bekleidungsstück.

## Beschreibung

Die Erfindung betrifft ein Vlies-/Folienlaminat umfassend eine Folie und auf beiden Seiten der Folie eine Vliesschicht.

Vlies-/Folienlaminate sind aus dem Stand der Technik vielfach bekannt. So beschreibt beispielsweise die WO 99/14262 ein Vlies-/Folienlaminat umfassend eine Polyethylenfolie, die einen Füllstoff beinhaltet, um der Folie eine Mikroporosität verleihen zu können, wobei der Film und ein Vliesstoff zusammenlaminiert werden. Dabei kann vorgesehen sein, dass auf einer oder beiden Seiten des Films ein Vlies aufgebracht sein kann.

Vliesstoffe besitzen den Vorteil, neben einer mechanischen Festigkeit, die sie einer Folie verleihen können, taktile Eigenschaften zu besitzen, die insbesondere bei Bekleidungsstücken ein angenehmeres Trageverhalten als Folienstoffe gewährleisten. Derartige Laminate finden daher z. B. für Bekleidungsstoffe, für den OP-Bereich, aber auch im biotechnologischen und chemischen Bereich Verwendung.

Trotz ihres gegenüber Folien angenehmeren taktilen Gefühls stellen auch Vliesstoffe ein Material dar, das beim Gebrauch gegenüber Folien ein erhöhtes Sicherheitsrisiko aufweist. So besitzen Vliesstoffe immer noch den Nachteil des für viele Anwendungen unzureichenden Faserzusammenhaltes. Darüber hinaus besitzen auch Vliesstoffe (Nonwoven) die Eigenschaft, eine glatte Oberfläche aufzuweisen. Derartige glatte Oberflächen haftet immer noch der Nachteil an, dass die gewünschten Eigenschaften eines textilen Materials im Anfassverhalten nicht sicher erreicht werden.

Aus einer Vielzahl von Druckschriften ist bekannt, Laminate vorzusehen, bei denen auf einer Seite eines Films ein Vliesstoff bzw. Nonwoven aufgebracht ist, so beispielsweise aus der WO 00/20208, wobei ein entsprechendes Laminat dort für den Einsatz im Bereich von OP-Materialien dienen soll.

Des Weiteren ist beispielsweise aus der WO 03/086758 ein "low-linting" Laminat bekannt, das aus einer netzartigen Folie und einer damit einseitig verbundenen absorbierenden Schicht besteht. Dieses Laminat kann als OP-Abdeckung oder in Hygieneprodukten Anwendung finden.

Weitere Vlies-/Folienlaminatstoffe sind beispielsweise aus der EP 0 912 788 B1 bekannt, die ein Film- /Vliesstofflaminat mit klebstoffverstärktem und verstrecktem Film offenbart.

Es soll nun Aufgabe der vorliegenden Erfindung sein, ein Vlies-/Folienlaminat bereitzustellen, das insbesondere im Bereich von Materialien für den Einsatz bei Operationen geeignet sein soll, umfassend eine Folie und auf beiden Seiten der Folie eine Vliesschicht, bei dem die taktilen Eigenschaften des Vliesstoffs möglichst denen eines textilen Materials entsprechen und auf der anderen Seite notwendige Kriterien für den Einsatz derartiger Materialien ebenfalls erreicht werden, wie z. B. Wasserdampfdurchlässigkeit, Wasserundurchlässigkeit, mechanische Stabilität. Des Weiteren soll ein Material geschaffen werden, das bei seiner Verwendung als Arbeitsmittel einen sicheren Arbeitsablauf gewährleistet.

Die Erfindung löst diese Aufgabe durch ein Vlies-/Folienlaminat mit den Merkmalen des Anspruchs 1 sowie ein Verfahren mit den Merkmalen des Anspruchs 13 und ein wegwerfbares Bekleidungsstück mit den Merkmalen des Anspruchs 15.

Bei dem Vlies-/Folienlaminat weist mindestens eine eine Sichtseite des Laminats bildende Oberfläche der Vliesschicht einen Lintingkoeffizienten kleiner 2,7 auf.

Insbesondere kann der Lintingkoeffizient kleiner 2,5 und insbesondere kleiner 2,2 liegen. Bei einem derartigen Lintingkoeffizient wird eine ausreichende Rauigkeit der Oberfläche erzielt, um den haptischen Eindruck des Vlies-/Folienlaminats einer Textilie zu erwirken.

Linting ist die Tendenz eines Textils oder Nonwoven Eigenmaterial in Form von Bruchstücken während des Gebrauchs abzugeben. Für ein Nonwoven bedeutet Linting die Abgabe von Partikeln wie Faserbruchstücke oder sonstige Komponenten, die zur Herstellung eines Nonwoven Verwendung finden, während des Gebrauchs.

Eine derartige Partikelfreisetzung ist insofern von Interesse, da beispielsweise bei Materialien, die im OP-Bereich Verwendung finden sollen, möglichst wenig Partikel aus Sterilitätsgründen und Gründen der Verunreinigung des Operationsfeldes freigesetzt werden sollen. Doch auch in anderen Anwendungsbereichen, in denen es insbesondere um besondere Reinheit der Arbeitsatmosphäre geht, ist eine Partikelfreisetzung unerwünscht. Ein Linting-Koeffizient kleiner 2,7 insbesondere kleiner 2,5 insbesondere kleiner 2,2 entspricht dabei einer Partikelanzahl (Partikel größer 3 µm) bezogen auf die Probe, wie im nachfolgend beschriebenen Test näher spezifiziert ist, von unter 500 Partikeln, insbesondere von unter 320 Partikeln und insbesondere unter 160 Partikeln.

Darüber hinaus ist vorgesehen, dass die mindestens eine eine Sichtseite des Laminats bildende Oberfläche zusätzlich einen Gleitreibungskoeffizienten µ zwischen µ = 0,35 und 0,75 aufweist. Insbesondere kann der Gleitreibungskoeffizient zwischen µ = 0,40 und 0,70 und insbesondere zwischen 0,45 und 0,65 liegen. Bei einem derartigen Gleitreibungskoeffizient wird eine ausreichende Rauigkeit der Oberfläche erzielt, um den haptischen Eindruck des Vlies-/Folienlaminats einer Textilie zu erwirken. Insbesondere soll der Gleitreibungskoeffizient in Ebenenrichtung des Laminats in beide Richtungen (Maschinenund Querrichtung der Herstellung des Laminats) gleich sein. Hierdurch muss bei der Weiterverarbeitung des Laminats nichts Besonderes beachtet werden.

Reibung ist der Widerstand, den zwei aufeinander liegende Oberflächen dem Gleiten entgegensetzen. Man unterscheidet Haft- und Gleitreibung. Dabei ist die Haftreibung (statische Reibung) die Reibung, die bei Beginn der Gleitbewegung als Schwellenwert zwischen relativ zueinander ruhenden Körpern vorliegt und bei denen die angreifende Kraft nicht ausreicht um eine Relativbewegung hervorzurufen.

Die Gleitreibung ist dagegen die Reibung, die unmittelbar nach Überwindung der Haftreibung bei der vorgegebenen Gleitgeschwindigkeit zwischen relativ zueinander bewegten Körpern noch wirksam bleibt. Hierbei ist die Gleitreibungskraft F_{D} die Kraft, die notwendig ist, um die Gleitreibung zu überwinden. Der Gleitreibungskoeffizient µ bestimmt sich durch das Verhältnis der Gleitreibungskraft zur Normalkraft F_{N} durch: µ = F_{D} / F_{N} .

Durch die erhöhte Rauigkeit ergeben sich bei aus dem Material hergestellten Waren, wie OP-Mänteln aber auch Abdecktüchern für ein Operationsfeld etc. Vorteile, da hier durch eine zu große Glattheit des Materials es zu einem Abrutschen kommen kann und damit die Arbeitssicherheit beeinträchtigt wird. Das erfindungsgemäße Material wirkt damit auch rutschhemmend.

Insbesondere ist dabei erfindungsgemäß keine zusätzliche mechanische oder chemische Behandlung der Oberfläche zur Erhöhung der Rauigkeit vorgesehen oder notwendig. Auch ist insbesondere keine zusätzliche Beschichtung, Imprägnierung oder das Einbringen von weiteren Mitteln zur Erhöhung der Rauigkeit der Oberfläche vorgesehen oder notwendig.

Bei einer derartig geringen Freisetzung an Partikeln wird trotz der erhöhten Rauigkeit, die im Stand der Technik stets mit einer erhöhten Partikelfreisetzung einhergeht, da ansonsten üblich ein Aufrauen der Oberfläche mechanisch erfolgt, eine geringstmögliche Freisetzung von Eigenpartikeln erreicht und damit ein Arbeitsumfeld geschaffen, in dem ein derartiger Stoff eingesetzt werden kann, das höchsten Reinheitsanforderungen entspricht.

Dabei ist das Laminat nicht zusätzlich oberflächenbehandelt oder hydrophobisiert. Vielmehr handelt es sich um ein selbständig hydrophobes Laminat, bei dem insbesondere die Vliesschichten hydrophob sind. Im Sinn dieser Schrift sind die Begriffe mehrschichtig und mehrlagig sowie Lage und Schicht synonym verwendet.

Dabei kann vorgesehen sein, dass die Vliesschicht auf einer oder auf beiden Seiten der Folie mehrschichtig ausgebildet sein kann. Es können hierbei insbesondere Spunbond- und Meltblownschichten vorgesehen sein, die insbesondere als Spunbond/Meltblown/Spunbond-Schichten oder auch Spunbond/Meltblown/Meltblown/Spunbond-Schichten abwechselnd angeordnet sind. Dabei ist vorzugsweise als nach außen weisende Schicht eine Spunbond-Schicht vorgesehen. Auf diese Weise können günstige Charakteristiken der Vliesschicht erzeugt werden, insbesondere da neben der Folie auch Meltblownschichten eine gewisse Flüssigkeitsrückhaltung gewährleisten. Das Vlies kann vorzugsweise thermoverfestigt sein, beispielsweise mittels eines Rautenkalanders. Die Herstellung des Vlies-/Folienlaminats kann dabei in einem einzigen Verfahrensschritt erfolgen, oder alternativ können die Vliesschichten zunächst separat hergestellt werden, um sie dann mit der Folie zu verbinden.

Bei der Folie kann es sich insbesondere um eine wasserundurchlässige, aber wasserdampfdurchlässige Folie handeln. Daraus resultiert, dass das Laminat eine Wasserdampfdurchlässigkeit (WVTR) von größer 4000 g/m²/24h aufweist. Weiterhin weist das Laminat eine Wasserresistenz auf, die durch die Wassersäule bestimmt wird, von größer 400 cm und insbesondere größer 500 cm.

Die Folie kann dabei insbesondere mikroporös sein. Eine derartige Mikroporosität kann insbesondere in eine Folie eingebracht werden, indem diese mit einem nicht polymeren, partikelförmigen Füllstoff, insbesondere Kalziumkarbonat versehen ist, und die Folie nach Herstellung derart verstreckt wird, dass sich an den Phasengrenzen zwischen Kunststoff und dem Füllstoff Kapillaren ausbilden, die auch nach der Entlastung der Folie erhalten bleiben.

Die Folie kann dabei Polyolefine, vorzugsweise Polyethylene umfassen. Insbesondere kann vorgesehen sein, dass die Folie aus einem thermoplastischen Polymerblend umfassend zwei oder mehr verschiedene Polyethylene bestehen kann. Insbesondere kann der Polymerblend LDPE und LLDPE umfassen.

Nach einem besonders bevorzugten Ausführungsbeispiel soll vorgesehen sein, dass das Vlies-/Folienlaminat durch einen Wärmebehandlungsvorgang hergestellt ist, mit dem eine Längenverkürzung in Ebenenrichtung einhergeht. Die Längenverkürzung in Ebenenrichtung kann dabei vorzugsweise in nur einer Richtung der Ebene (Vorzugsrichtung) erfolgen, wobei hier unter Längenverkürzung in nur einer Richtung verstanden werden soll, dass die Längenverkürzung senkrecht zur Vorzugsrichtung höchstens 1/10 der Längenverkürzung der Vorzugsrichtung betragen soll. Die Längenverkürzung in zumindest eine Richtung kann dabei mindestens 2 % und insbesondere mindestens 3 % der Länge der Probe in dieser Richtung betragen. Die Längenverkürzung in zumindest eine Richtung kann dabei höchstens 10 % und insbesondere höchstens 6 % der Länge der Probe in dieser Richtung betragen. Dabei können insbesondere Temperaturen zwischen 45 und 100° C und insbesondere zwischen 45 und 90° C sowie insbesondere zwischen 45 und 80° C und weiter insbesondere zwischen 50 und 65° C während der Wärmebehandlung eingesetzt werden.

Die Schrumpfung bzw. Längenverkürzung in Ebenenrichtung wird dabei insbesondere in der Richtung erfolgen, die der Maschinenrichtung (MD) bei der Herstellung des Vlies- /Folienlaminates entspricht. Besonders vorteilhaft kann vorgesehen sein, wenn die Längenverkürzung mit einem Sterilisationsschritt des Materials bzw. insbesondere des fertigen Produktes kombiniert werden kann, so dass kein zusätzlicher Verfahrensschritt notwendig ist. Darüber hinaus erfolgt durch die Längenverkürzung in eine Richtung eine Vergrößerung der Dicke des Laminats, wobei das Laminat bzw. insbesondere der Vliesstoff aufgeworfen wird. Dabei wölben sich die Fasern des Vliesstoffes auf, ohne den Zusammenhalt der Fasern zu beeinträchtigen. Dies zeigt sich durch die sehr kleinen Lintingkoeffizienten.

Dabei kann vorgesehen sein, dass durch die Längenverkürzung eine Dickenzunahme von größer 30 %, insbesondere größer 40 % und insbesondere größer 50 % erzielt wird. Erfindungsgemäße Laminate können dabei vorzugsweise eine Dicke von 0,2 bis 1,0 mm, besonders 0,3 bis 0,8 mm und ganz besonders 0,4 bis 0,6 mm vor der Wärmebehandlung besitzen. Des Weiteren können erfindungsgemäße Laminate vorzugsweise eine Dicke von 0,3 bis 1,5 mm, besonders 0,4 bis 1,0 mm und ganz besonders 0,5 bis 0,7 mm nach der Wärmebehandlung besitzen.

Die Schichten, nämlich die Folie mit den Vliesschichten können über einen Kleber, der insbesondere nicht vollflächig aufgebracht ist und insbesondere ein Schmelzkleber ist, verbunden sein. Ein Verfahren zu einem nicht vollflächigen Auftrag ist z.B. ein Kontaktverfahren gemäß der EP 568 812 A1. Alternativ kann eine Verbindung der Schichten mittels thermischer Verfestigungsverfahren oder Ultraschallverbinden erfolgen.

In einer besonders bevorzugten Ausführungsform kann vorgesehen sein, dass das Vlies-/Folienlaminat symmetrisch zur Folie aufgebaut ist. Dabei kann sowohl eine Symmetrie hinsichtlich des Schichtenaufbaus d.h. hinsichtlich der Anzahl und Abfolge der Spunbond- und Meltblown-Schichten gegeben sein als auch hinsichtlich der zur Herstellung der einzelnen Spunbond- oder Meltblown-Schichten verwendeten Materialien vorgesehen sein. Darüber hinaus kann hinsichtlich der Symmetrie auch die verschiedene Charakteristik der Seiten der Vliesschichten berücksichtigt werden, die sich durch den Herstellungsprozess ergeben kann.

Des Weiteren umfasst die Erfindung eine Verwendung eines Vlies-/Folienlaminats für ein wegwerfbares insbesondere sterilisierbares Bekleidungsstück, wobei insbesondere vorgesehen sein kann, dass die flächenbildenden Wandungen des Bekleidungsstücks aus einem entsprechenden Vlies-/Folienlaminat gebildet sind. Darüber hinaus kann das Material auch für Abdeckungen insbesondere im OP-Bereich und Kleidungsstücke im OP-Bereich, wie OP-Mäntel und - Kittel aber auch OP-Hauben etc. Verwendung finden.

Schließlich umfasst die Erfindung noch ein selbstständig erfinderisches Verfahren zur Herstellung eines Vlies-/Folienlaminats, wobei ein Schichtenverbund aus Folie und den mit der Folie beidseitig verbundenen Vliesschichten einer Wärmebehandlung unterzogen wird, und dabei eine Längenverkürzung in Ebenenrichtung des Schichtenverbunds herbeigeführt wird. Dabei können insbesondere Temperaturen zwischen 45 und 100° C und insbesondere zwischen 45 und 90° C sowie insbesondere zwischen 45 und 80° C und weiter insbesondere zwischen 50 und 65° C während der Wärmebehandlung angesetzt sein. Es kann vorgesehen sein, dass eine Längenverkürzung insbesondere nur in einer Ebenenrichtung vorgesehen ist, wobei hier unter Längenverkürzung in nur einer Richtung verstanden werden soll, dass die Längenverkürzung senkrecht zur Vorzugsrichtung höchstens 1/10 der Längenverkürzung der Vorzugsrichtung betragen soll. Die Längenverkürzung in zumindest eine Richtung kann dabei mindestens 2 % und insbesondere mindestens 3 % der Länge der Probe in dieser Richtung betragen. Die Längenverkürzung in zumindest eine Richtung kann dabei höchstens 10 % und insbesondere höchstens 6 % der Länge der Probe in dieser Richtung betragen.

Im Folgenden sollen die angewandten Prüfmethoden näher erläutert werden.

### Linting-Koeffizient:

Die Feststellung des Linting-Koeffizienten erfolgt nach dem internationalen Standard ISO 9073-10. Zur Messung wurde ein Gerät Gelbo Flex 5000 der Firma Instrument Marketing Services/Fairfield sowie ein Counter LS 31C der Firma SFP verwandt.

### Gleitreibungskoeffizient:

Die Messung des Reibungsverhaltens erfolgte gemäß DIN 53375, wobei folgende Prüfgeräte eingesetzt wurden:
- hydraulische Stanze
- Stanzmesser 65 x 200 mm ± 0,25 mm
- Stanzmesser 150 x 300 mm ± 0,25 mm
- Zugprüfmaschine nach DIN 51221 Klasse 1
- Zusatzgerät bestehend aus Probentisch mit Abzugschlitten
- Reibklotz nach DIN 53375 (Hersteller F. A. Zwick/Roell).

Probenvorbereitung: Die Proben müssen mindestens 16 Stunden im Normklima DIN 50014 - 23/50-2 - gelagert werden. Die Proben dürfen nicht geknickt, gefaltet oder zerkratzt sein, Fingerabdrücke, Staub und andere Verunreinigungen sind zu vermeiden.

Die Prüfung erfolgt dabei Laminataußenseite gegen Laminataußenseite, d.h., dass die selben Seiten gegeneinander geprüft werden, wobei bei der Messung die Maschinenrichtung und die Querrichtung des Laminats berücksichtigt wurden und jeweils gleiche Richtungen des Laminats gegeneinander gemessen wurden.

Prüfverfahren: Probenkörper 1 (150 x 300 mm) wird möglichst deckungsgleich mit der Grundplatte des Probentisches befestigt. Der Probenkörper 2 (65 x 200 mm) wird in den Reibklotz faltenfrei eingespannt und mittels eines Fadens (ohne Eigendrehung) am Kraftaufnehmer befestigt. Der Reibklotz mit dem Probenkörper 2 wird vorsichtig auf den Probenkörper 1 so aufgelegt, dass sich die Testseiten berühren. Die Verbindung zum Kraftaufnehmer sollte dabei noch nicht gespannt sein. 15 Sekunden nach Auflegen des Reibklotzes wird der Versuch gestartet. Nach etwa 60 mm Reibungsweg kann der Versuch beendet werden. Die Prüfgeschwindigkeit beträgt 100 m pro Minute auch für den Vor- und Nachmessweg.

Auswertung: Der Vormessweg von 10 mm sowie der Nachmessweg von 10 mm werden zur Auswertung nicht herangezogen. Der Kraftverlauf einer längeren Gleitbewegung weicht infolge von Sekundäreffekten oft vom Ideal eines konstanten Niveaus ab. Für die Ermittlung der Gleitreibungszahl µ wird nur der Kraftverlauf des Wegs von 60 mm herangezogen.

Die Gleitreibungszahl µ ergibt sich nach folgender Formel: µ: µ = F_{D} : F_{N}, wobei F_{D} die Gleitreibungskraft in Newton und F_{N} die Normalkraft in Newton ist (gemäß Norm hier: F_{N} = 1,96 N). Es soll hierbei eine Probenzahl von mindestens n = 5 verwendet werden und es wird der Mittelwert sowie die Standardabweichung auf zwei Nachkommastellen gerundet. Auf diese Weise wurde hier die Gleitreibung des Vlies-/Folienlaminats ermittelt.

### Wasserdampfdurchgangswiderstand:

Zur Messung des Wasserdampfdurchgangswiderstandes Rₑₜ = (m² Pa/W) erfolgte wie folgt:
- Prüfgerät: Thermoregulationsmodell der menschlichen Haut (Hautmodell, Forschungsinstitut Hohenstein, Schloss Hohenstein, 74357 Bönningheim, Deutschland))
- Prüfbedingungen: DIN 31092 (02/94) bzw. ISO 11092 (10/93)
- Prüfklima: Temperatur 35° C, 40 % relative Feuchte.

Es wurde hierbei ein Mittel aus drei Einzelmessungen an drei verschiedenen Probenabschnitten des Musters gebildet.

Hierbei gilt, dass insbesondere bei Bekleidungsstücken diese aus bekleidungsphysiologischer Sicht umso günstiger zu beurteilen sind, je niedriger der materialspezifische Wasserdampfdurchgangswiderstand Rₑₜ ausfällt, da damit eine umso bessere Schweißverdampfung vom Körper des Trägers möglich ist. Aufgrund von Forschungsarbeiten können zur Beurteilung der physiologischen Güte von Textilien mit Barrierewirkung, insbesondere für OP-Kleidung folgende Kriterien angesetzt werden: Rₑₜ ≤ 8 m² Pa/W = sehr gut, Rₑₜ > 40 m²Pa/W = ungenügend.

### Dickenmessung:

Die Methode dient zur Dickenbestimmung von flächigen Gebilden unter definierter Belastung, unter Verwendung eines mechanischen Dickenmessgerätes mit Messskala und verschiedenen Gewichten sowie einer Messfläche von 25 cm² und einer Skaleneinteilung von 0,01 mm. Aus dem Probenmaterial wird ein Prüfmuster ausreichender Größe ausgeschnitten und das Prüfmuster an das Normklima (23° C, 50 % Feuchte) angeglichen. Das Dickenmessgerät wird gemäß Bedienungsanleitung in Betrieb genommen und die Dicke wird nach Vorgabe unter einer Belastung von 5 g/cm² in Millimeter auf 0,01 mm genau gemessen. Die Auswertung erfolgt, indem die Dicke an fünf Proben in Millimeter gemessen und daraus der Durchschnittswert ermittelt und auf zwei Dezimalen gerundet wird.

Die erfindungsgemäßen Größenangaben entsprechen dabei, sofern nichts anderes angegeben ist, dem jeweils nach der angegebenen Prüfmethode ermittelten Mittelwert.

Schließlich soll die Erfindung anhand eines Beispiels im Folgenden näher erläutert werden.

Weitere Vorteile und Merkmale der Erfindung ergeben sich aus dem nachfolgenden Beispiel sowie seiner Beschreibung: Das Beispiel betrifft ein Vlies-/Folienlaminat, das symmetrisch zur Folienmittelschicht aus zwei Lagen Vlies und einer mikroporösen Folie geschichtet ist. Dabei besteht jede Lage Vlies aus einem
Spunbond/Meltblown/Meltblown/Spunbond-Laminat (SMMS), das thermoverfestigt ist und seinerseits symmetrisch aufgebaut. Die beiden Mittellagen des Meltblown sind nach der Herstellung nicht mehr separat feststellbar. Der Verbund der Vliesstofflage mit der Folie erfolgt mittels eines Hotmeltadhäsivs mit einem Flächenauftrag von 2 g/m² pro zu verbindender Fläche. Der Auftrag ist nicht vollflächig und erfolgt in einem Kontakt-Beschichtungsverfahren gemäß der EP 568 812 A1 über steuerbare Breitschlitzdüsen. Hierbei weist der Vliesstoff folgende Eigenschaften auf:
- Flächengewicht 17 g/m²,
- Aufteilung SMMS = 6,8 - 1,7 - 1,7 - 6,8 [g/m²],

Der Vliesstoff besteht aus verschiedenen Polypropylenen (PP). Keine der Lagen wird einer antistatischen Oberflächen-behandlung unterzogen oder nachträglich hydrophobisiert.

Die Folie besteht aus einem thermoplastischen Polymerblend aus low density Polyethylen (LDPE) sowie einem linear-low density Polyethylen (LLDPE) und einem Füllstoff, hier Kalziumkarbonat (CaCO₃).

Die Folie ist dabei einlagig und unelastisch und hat ein Flächengewicht von 25 g/m² und weist eine Filmstärke von 25 µm auf. In der Folie sind 50 Gew.-% (± 12 Gew.-%) Kalziumkarbonat enthalten, das einen mittleren Teilchendurchmesser von kleiner 2 µm aufweist. Um die Folie mit Mikroporen auszustatten, wird sie uniaxial in Maschinenrichtung gestreckt.

Das Laminat wurde dann nach den vorstehend beschriebenen Methoden Tests u. a. zur Bestimmung der Parameter und zum Schrumpfverhalten unterzogen. Dabei erfolgte die Wärmebehandlung in einem Wärmeschrank bei 54° C und 70 % relativer Luftfeuchte, Dauer 6 Stunden. Es konnten folgende Werte ermittelt werden:
1) Längenveränderung(Laminat) durch Wärmebehandlung
Die Messungen wurden an 5 gleichgroßen, ausgestanzten Materialstücken in der Größe von 206 mm x 294 mm (MD x CD) durchgeführt. Alle 5 Muster hatten nach der Wärmebehandlung im erkalteten Zustand bei Raumtemperatur eine Größe von 200 mm x 296 mm (MD x CD).

| | |
|---|---|
| Längenveränderung in Maschinenrichtung (MD): | -2,9 % |
| Längenveränderung in Querrichtung (CD): | +0,7 % |

2) Flächengewicht (F) / g/ m² - gemittelt über 10 Messungen (Mittelwert und Standardabweichung),
gemessen mit Mettler Toledo PB 3002

| | | |
|---|---|---|
| F | (vor Wärmebehandlung) | = 63,2 g/ m² (s = 1,7 g/ m²) |
| F | (nach Wärmebehandlung) | = 65, 6 g/ m² (s = 1, 0 g/ m²) |

Das Flächengewicht erhöht sich dabei im Mittel durch die Wärmebehandlung um ca. 4 %.
3) Dickenmessung, Dicke (D) / mm - gemittelt über 10 Messungen (Mittelwert und Standardabweichung)

| | | |
|---|---|---|
| D | (vor Wärmebehandlung) | = 0,43 mm (s = 0,005 mm) |
| D | (nach Wärmebehandlung) | = 0,66 mm (s = 0,020 mm) |

Die Dicke erhöht sich dabei im Mittel durch die Wärmebehandlung um ca. 53 %.
4) Gleitreibungskoeffizient µ - gemittelt über 10 Messungen (Mittelwert und Standardabweichung)

| | | |
|---|---|---|
| µ | (MD, vor Wärmebehandlung)= | 0,46 (s = 0,04) |
| µ | (MD, nach Wärmebehandlung)= | 0,52 (s = 0,07) |
| µ | (CD, vor Wärmebehandlung)= | 0,48 (s = 0,04) |
| µ | (CD, nach Wärmebehandlung)= | 0,57 (s = 0,06) |

Es wurde daraufhin eine Prüfung nach der Sterilisation mit Ethylenoxid und Wärme mit den gleichen Bedingungen wie vorher durchgeführt (54°C, 70% relative Luftfeuchte, Dauer 6h):
1) Längenveränderung(Laminat):
Die Messungen wurden an 5 gleichgroßen, ausgestanzten Materialstücken in der Größe von 206 mm x 294 mm (MD x CD) durchgeführt. Alle 5 Muster hatten nach der Sterilisation im erkalteten Zustand bei Raumtemperatur eine Größe von 200 mm x 296 mm (MD x CD).

| | |
|---|---|
| Längenveränderung in Maschinenrichtung (MD): | -3,0 % |
| Längenveränderung in Querrichtung (CD): | 0,0 % |

2) Flächengewicht (F) / g/ m² - gemittelt über 10 Messungen (Mittelwert und Standardabweichung) Gemessen mit Mettler Toledo PB 3002

| | | |
|---|---|---|
| F | (vor Wärmebehandlung) | = 65,2 ± 1,3 g/ m² |
| F | (nach Wärmebehandlung) | = 66,6 ± 1,0 g/ m² |

Das Flächengewicht erhöht sich dabei im Mittel durch die Wärmebehandlung um ca. 2 %.
3) Dickenmessung, Dicke (D) / mm - gemittelt über 5 Messungen (Mittelwert und Standardabweichung)

| | | |
|---|---|---|
| D | (vor Wärmebehandlung) | = 0,43 ± 0,005 mm |
| D | (nach Wärmebehandlung) | = 0,68 ± 0,005 mm |

Die Dicke erhöht sich dabei im Mittel durch die Wärmebehandlung um ca. 58 %.
4) Gleitreibungskoeffizient µ - gemittelt über 5 Messungen (Mittelwert und Standardabweichung)

| | | |
|---|---|---|
| µ | (MD, vor Wärmebehandlung) | = 0,46 ± 0,02 |
| µ | (MD, nach Wärmebehandlung) | = 0,51 ± 0,02 |
| µ | (CD, vor Wärmebehandlung) | = 0,51 ± 0,03 |
| µ | (CD, nach Wärmebehandlung) | = 0,52 ± 0,03 |

5) Wasserdampfdurchlässigkeit (WVTR) / g/ m²/ 24h (Klima B) - gemittelt über 5 Messungen (Mittelwert und Standardabweichung), nach DIN 53 122-1

| | | |
|---|---|---|
| WVTR | (vor Wärmebehandlung) | = 5182 ± 115 g/ m² - 24h |
| WVTR | (nach Wärmebehandlung) | = 5149 ± 252 g/ m² - 24h |

6) Wassersäule (W) / cm bei einem Gradienten von 60 mbar/ min - gemittelt über 5 Messungen (Mittelwert und Standardabweichung)
Nach EN 20 811, Gerät Textest FX 3000

| | | |
|---|---|---|
| W | (vor Wärmebehandlung) | = 565 ± 45 cm |
| W | (nach Wärmebehandlung) | = 592 ± 20 cm |

7) Wasserdampfdurchgangswiderstand - gemittelt über 3 Messungen

Ret = 25,07 m² Pa/W

Weiterhin wurden Linting-Werte ermittelt über 5 Proben, wobei jeweils beide Seiten gemessen wurden. Die Ergebnisse lagen dabei zwischen 1,28 und 2,49, was einer Teilchenmenge größer 3 µm pro Probe von zwischen 19 und 310 entspricht.
8) Linting (L) / Anzahl der Partikel > 3 µm
Gelbo Flex 5000 ES von Instrument Marketing Services aus
Fairfield; Counter LS 31C von der Fa. SFP
Es wurde steriles Material, das gemäß den genannten Bedingungen sterilisiert wurde, getestet - 5 Messungen je Seite (Mittelwert und Standardabweichung)

| | | |
|---|---|---|
| L | (Seite 1) | = 130 ± 116 |
| L | (Seite 2) | = 105 ± 113 |

Die Erfindung stellt auf diese Weise ein Material bereit, das besonders für den Einsatz in OP-Materialien, wie beispielsweise OP-Schürzen und Mäntel, OP-Hauben aber auch Abdecktüchern aufgrund seiner angenehmen textilen Eigenschaften und gleichzeitig seines geringen Linting-Koeffizienten eine besonders günstige Einsatzmöglichkeit darstellt. Darüber hinaus ist die Fertigung des Materials einfach und auch eine Weiterverarbeitung kann unproblematisch bereitgestellt werden.

## Patentansprüche

1. Vlies-/Folienlaminat umfassend eine Folie und auf beiden Seiten der Folie eine Vliesschicht, **dadurch gekennzeichnet, dass** mindestens eine eine Sichtseite des Laminats bildende Oberfläche der Vliesschicht einen Lintingkoeffizienten kleiner 2,7 aufweist und wobei die mindestens eine Sichtseite des Laminats bildende Oberfläche der Vliesschicht einen Gleitreibungskoeffizienten zwischen µ = 0,35 und 0,75 aufweist und das Laminat einer Wassersäule von W > 400 cm, insbesondere von W > 500 cm standhält und eine Wasserdampfdurchlässigkeit von WVTR > 4000 g/m²/24h aufweist.

2. Vlies-/Folienlaminat nach Anspruch 1, **dadurch gekennzeichnet, dass** der Lintingkoeffizienten kleiner 2,5 und insbesondere kleiner 2,2 ist.

3. Vlies-/Folienlaminat nach einem der Ansprüche 1 oder 2, **dadurch gekennzeichnet, dass** der Gleitreibungskoeffizient zwischen µ = 0,40 und 0,70 liegt und insbesondere zwischen µ = 0,45 und 0,65.

4. Vlies-/Folienlaminat nach einem der vorangehenden Ansprüche, **dadurch gekennzeichnet, dass** die Vliesschicht auf einer oder beiden Seiten der Folie mehrlagig ausgebildet ist.

5. Vlies-/Folienlaminat nach Anspruch 4, **dadurch gekennzeichnet, dass** die Vliesschicht Spunbond- und Meltblownschichten umfasst, und insbesondere eine oder beide Vliesschichten ein Spunbond-/Meltblown- /Spunbond-Laminat ist oder eine oder beide Vliesschichten ein Spunbond-/Meltblown-/Meltblown- /Spunbond-Laminat ist.

6. Vlies-/Folienlaminat nach einem der vorangehenden Ansprüche, **dadurch gekennzeichnet, dass** eine oder beide Vliesschichten thermoverfestigt sind.

7. Vlies-/Folienlaminat nach einem der vorangehenden Ansprüche, **dadurch gekennzeichnet, dass** eine oder beide Vliesschichten hydrophob sind.

8. Vlies-/Folienlaminat nach einem der vorangehenden Ansprüche, **dadurch gekennzeichnet, dass** die Folie mikroporös ist.

9. Vlies-/Folienlaminat nach einem der vorangehenden Ansprüche, hergestellt umfassend einen Wärmebehandlungsvorgang und eine damit einhergehende Längenverkürzung in Ebenenrichtung, wobei insbesondere die Längenverkürzung in Ebenenrichtung im Wesentlichen nur in einer Richtung erfolgt.

10. Vlies-/Folienlaminat nach einem der vorangehenden Ansprüche, **dadurch gekennzeichnet, dass** die Vliesschichten mit der Folie durch einen Kleber verbunden sind und insbesondere der Kleber nicht vollflächig aufgebracht ist.

11. Vlies-/Folienlaminat nach einem der vorangehenden Ansprüche, **dadurch gekennzeichnet, dass** das Vlies-/Folienlaminat insbesondere symmetrisch zur Folie aufgebaut ist.

12. Verwendung eines Vlies-/Folienlaminats nach einem der vorangehenden Ansprüche, für ein wegwerfbares, insbesondere sterilisierbares Bekleidungsstück.

13. Verfahren zur Herstellung eines Vlies-/Folienlaminats nach einem oder mehreren der vorstehenden Ansprüche, **dadurch gekennzeichnet, dass** ein Schichtenverbund aus der Folie und den mit der Folie verbundenen Vliesschichten einer Wärmebehandlung unterzogen wird und dabei eine Längenverkürzung in Ebenenrichtung des Schichtenverbunds, und insbesondere im Wesentlichen nur in einer Richtung, herbeigeführt wird.

14. Verfahren nach Anspruch 13, **dadurch gekennzeichnet, dass** die Wärmebehandlung bei Temperaturen zwischen 45 und 100°C, insbesondere zwischen 45° und 90°C, insbesondere zwischen 45° und 80° und weiter insbesondere zwischen 50° und 65°C durchgeführt wird.

15. Wegwerfbares Bekleidungsstück, **dadurch gekennzeichnet, dass** seine flächenbildenden Wandungen aus dem Vlies-/Folienlaminat nach einem oder mehreren der vorstehenden Ansprüche bestehen.
